# EUROPÄISCHE PATENTSCHRIFT

(11) **EP 3 215 354 B1**
(45) Veröffentlichungstag und Bekanntmachung des Hinweises auf die Patenterteilung: **01.01.2020**
(21) Anmeldenummer: 15791275.9
(22) Anmeldetag: 02.11.2015
(51) Int. Cl.: B29C 70/52, B29B 15/12

(54) **VERFAHREN ZUM HERSTELLEN VON UNIDIREKTIONAL FASERVERSTÄRKTEM KUNSTSTOFFMATERIAL UND VORRICHTUNG ZUR DURCHFÜHRUNG DES VERFAHRENS**
METHOD FOR PRODUCING UNIDIRECTIONALLY FIBER-REINFORCED PLASTIC MATERIAL AND DEVICE FOR PERFORMING THE METHOD
PROCÉDÉ DE PRODUCTION DE MATIÈRE PLASTIQUE RENFORCÉE PAR DES FIBRES UNIDIRECTIONNELLES ET DISPOSITIF POUR METTRE EN UVRE LE PROCÉDÉ

(30) Priorität: 04.11.2014 DE 102014016289
(43) Veröffentlichungstag der Anmeldung: 13.09.2017
(73) Patentinhaber: ProTec Polymer Processing GmbH, 64625 Bensheim (DE)
(72) Erfinder: LITTWITZ, Brigitte, 60316 Frankfurt (DE); BRIESE, Uwe, 63225 Langen (DE)
(74) Vertreter: Staudt, Armin Walter
(86) Internationale Anmeldenummer: PCT/EP2015/075415
(87) Internationale Veröffentlichungsnummer: WO 2016/071266

(56) Entgegenhaltungen:
- CN-A- 103 998 213
- DE-A1- 19 754 381
- US-A- 5 112 206
- US-A- 5 277 566

## Beschreibung

Die Erfindung betrifft ein Verfahren zum kontinuierlichen Herstellen von unidirektional faserverstärktem Kunststoffmaterial mit einem Faseranteil im Bereich von 10 bis 70 Vol.-%, wobei mindestens ein Faserstrang durch einen Fließkanal mit einer lichten Durchlasshöhe im Bereich von 0,1 bis 5,0 mm geführt wird, dort durch Spreizungselemente gespreizt und mit einem schmelzflüssigen thermoplastischen Kunststoff mit einer Viskosität im Bereich zwischen 10³ mPa s und 10⁸ mPa s imprägniert wird.

Weiterhin betrifft die Erfindung eine Vorrichtung zum kontinuierlichen Imprägnieren von Fasermaterial mit einem Gehäuse mit Heizelementen, einem Extruderanschluss zur Schmelzezuführung und mindestens eine Öffnung zur Zuführung von mindestens einem Faserstrang in einen mindestens ein Spreizungselement für den Faserstrang aufweisenden Fließkanal mit einer lichten Durchlasshöhe im Bereich von 0,1 bis 5,0 mm, in dem die Imprägnierung des Faserstrangs erfolgt, und mit einer Austrittsdüse zum Herausführen des mindestens einen imprägnierten Faserstrangs.

### Stand der Technik

Aus US 4,439,387 und US 5,277,566 sind gattungsgemäße Verfahren und Vorrichtungen zum Imprägnieren von Fasersträngen mit Kunststoff bekannt, die auf verschiedene Weise die Faserstränge umlenken, dabei Spannung an den Fasern erzeugen und die Faserstränge auseinanderspreizen, um so dem Polymer Zutritt zum Zwischenraum zwischen den Fasern zu verschaffen. Die Vorrichtungen haben einen teilbaren Imprägniereinsatz mit sich gegenüberliegenden Spreizungselementen, die im geschlossenen Zustand einen Polymerfließkanal mit geringer Durchflusshöhe und Spaltbreite ausbilden, in dem ein zugeführter Faserstrang aufgeweitet und von der eingespritzten Polymermasse durchdrungen wird. Die Methode hat aber den Nachteil, dass die empfindlichen Fasern dabei hohen mechanischen und thermischen Belastungen ausgesetzt werden. Eine gleichmäßige Verteilung von Polymermasse auf den Fasern ist nur bei sehr hohen Spreizungen möglich, die mit sehr hohen Spannungen verbunden sind, was zu Schädigungen der Fasern, oder im schlimmsten Fall zur Produktionsunterbrechung durch Faserabriss führt. Außerdem sollte die Viskosität der Kunststoffschmelze möglichst niedrig gehalten werden, was ein Arbeiten bei erhöhten Temperaturen bedeutet. Dadurch wird aber mitunter der Kunststoff wegen des erhöhten Temperatur-Zeit-Erlebnisses, dem er dabei ausgesetzt ist, geschädigt oder zumindest werden seine Eigenschaften verändert.

Aus CN 103 998 213 A (entspricht WO 2013/092738 A2) ist ebenfalls ein Verfahren zur Imprägnierung von Faserbündeln mit einem Polymer bekannt. Hierbei ragen Ultraschallfinger in den Fließkanal, von denen Vibrationen auf den Imprägniervorgang einwirken. Die Ultraschall-Vibrationen unterstützen die Tränkung des Faserbündels mit dem Polymer, so dass das Verfahren auch bei erhöhter Geschwindigkeit durchgeführt werden kann, ohne dass eine Blasenbildung im Verbundkörper aus imprägnierten Faserbündeln zu befürchten ist.

### Technische Aufgabenstellung

Der Erfindung liegt daher die Aufgabe zugrunde, ein Verfahren zu entwickeln, das eine Imprägnierung von Fasersträngen mit thermoplastischem Kunststoff unter geringerer mechanischer und thermischer Belastung auch von relativ dicken Fasersträngen ermöglicht, und das trotzdem wirtschaftlich und im kontinuierlichen Betrieb mit hoher Produktionsgeschwindigkeit durchgeführt werden kann. Weiterhin liegt der Erfindung die Aufgabe zugrunde eine entsprechende Vorrichtung zur Durchführung des Verfahrens anzugeben.

### Allgemeine Beschreibung der Erfindung

Hinsichtlich des Verfahrens wird die oben genannte Aufgabe ausgehend von einem Verfahren der eingangs genannten Gattung erfindungsgemäß dadurch gelöst, dass während der Imprägnierung eine Vibration auf den mindestens einen Faserstrang und die Kunststoffschmelze im Fließkanal einwirkt, und dass beim Aufspreizen der Faserstränge während der Imprägnierung eine mechanische Spannung im Bereich von 20 bis 1000 N eingestellt wird.

Beim erfindungsgemäßen Verfahren durchlaufen ein oder mehrere Faserstränge einen engen Fließkanal mit geringer Durchlasshöhe, in dem die Imprägnierung mit einer thermoplastischen Kunststoffschmelze stattfindet. In dem Fließkanal befinden sich Spreizungselemente, die den Faserstrang aufspreizen und mit dem schmelzflüssigen thermoplastischen Kunststoff umgeben. Erfindungsgemäß werden während der Imprägnierung die Faserstränge und die Kunststoffschmelze in Vibration versetzt. Die Spannung, die erfindungsgemäß an den Fasersträngen zum Aufspreizen anliegt, liegt im Bereich von 20 bis 1000 N.

Durch die gezielte Anregung durch Vibration wird das Durchströmen der aufgespreizten Faserstränge mit schmelzflüssigem Kunststoff erleichtert und das Ankoppeln des Kunststoffes an der Oberfläche jeder einzelnen Faser deutlich beschleunigt. Dies gilt auch für hohe Faseranteile und große Garnstärken, da durch die Vibration das Vordringen der Polymerschmelze in den Faserstrang nicht nur von oben und unten erfolgt, sondern auch seitliches Eindringen ermöglicht wird. Die nach herkömmlichem Verfahren - ohne Vibration - notwendige hohe Spannung zum Aufspreizen der Faserstränge, die für eine gleichmäßige Imprägnierung notwendig ist, kann durch das erfindungsgemäße Verfahren signifikant reduziert werden. Gleichzeitig wird die Durchdringung der Faserstränge mit schmelz-flüssigem Kunststoff bei niedrigeren Temperaturen möglich, da durch die Vibration die Scherbeanspruchung der in den Fließkanal eingespritzten Kunststoffschmelze verstärkt wird. Es können somit auch relativ hoch-viskose Schmelzen problemlos eingesetzt werden, was die Anwendbarkeit des erfindungsgemäßen Verfahrens auf eine breite Auswahl von thermoplastischen Kunststoffen gewährleistet. Die Viskosität der schmelzflüssigen thermoplastischen Kunststoffe, die problemlos im erfindungsgemäßen Verfahren eingesetzt werden, liegt im Bereich zwischen 10³ mPa s und 10⁸ mPa s. Durch den zusätzlichen Energieeintrag durch Vibration während der Imprägnierung wird überdies die Verweilzeit im Fließkanal reduziert. Dies hat den Vorteil, dass die thermoplas-tische Kunststoffschmelze nur relativ kurz auf erhöhte Temperatur gebracht wird und daher keine temperaturbedingten Schmelzveränderungen durch Crack-Prozesse zu befürchten sind.

Zur Wirtschaftlichkeit des erfindungsgemäßen Verfahrens trägt weiterhin bei, dass der Fließkanal nur eine geringe, im Wesentlichen konstante Durchlasshöhe im Bereich von 0,1 mm bis 5,0 mm hat, wodurch nur ein kleines Volumen an Kunststoffschmelze zur Imprägnierung benötigt wird und es durch den engen Fließkanal praktisch kein Totvolumen für die Kunststoffschmelze gibt. Unter der Durchlasshöhe wird nur die lichte Höhe des Fließkanals verstanden. Die Öffnung zur Zuführung des Faserstrangs und die Öffnung zum Einspritzen der Kunststoffschmelze (letztere auch Anguss genannt) in den Fließkanal sowie auch die Auslassöffnungen für den imprägnierten Faserstrang können davon abweichende Durchlassweiten und -höhen aufweisen. Die Ausrichtung des Fließkanals ist in der Regel horizontal, es ist aber auch möglich den Fließkanal vertikal oder in einer Schräge auszurichten, wobei die Fließrichtung (Durchführung des Faserstrangs und der Kunststoffschmelze) aufwärts oder abwärts erfolgen kann.

Durch das erfindungsgemäße Verfahren unter Einsatz von Vibration wird eine wesentliche Verbesserung der Imprägnierung der Fasern mit Kunststoff bei hoher Produktionsgeschwindigkeit erreicht, woraus zusätzlich eine besonders schonende Handhabung der Faserstränge resultiert, die die Produktionssicherheit erhöht und die Produktionsunterbrechungen durch Abrisse auf Null reduziert.

Vorteilhafterweise wird der Faserstrang in einem in Fließrichtung eine Wellenstruktur aufweisenden Fließkanal geführt, wobei die Wellen der Wellenstruktur als Spreizungselemente für den Faserstrang wirken. Die Wellenstruktur ist als ein wellenförmiges Querschnittsprofil zu verstehen, das zwei parallele, im Wesentlichen sinusförmige Profile aufweist, wobei ein Profil die Basis des Fließkanals bildet und das andere dazu parallel, in einem die Durchlasshöhe bildenden Abstand zur Basis angeordnet ist. Der Faserstrang gerät beim Durchführen durch den Fließkanal in Kontakt mit den Wellen, so dass diese den Faserstrang aufspreizen. Somit wirken die Wellen der Wellenstruktur des Fließkanals als Spreizungselemente.

Eine andere Ausprägung der Erfindung ist gegeben, wenn der Faserstrang in einem Fließkanal geführt wird, der Stifteinsätze und/oder Rundstäbe als Spreizungselemente aufweist. Derartige Stifteinsätze oder Rundstäbe spreizen den Faserstrang ebenfalls im Fließkanal auf. Sie können zusätzlich in der Wellenstruktur des Fließkanals eingefügt sein, aber auch als einzige Spreizungselemente in einem Fließkanals ohne Wellenstruktur, oder in einem Teilabschnitt des Fließkanals ohne Wellenstruktur vorgesehen sein.

Um faserverstärktes Kunststoffmaterial auch aus Fasersträngen mit geringen Garnstärken oder faserverstärktes Kunststoffmaterial in Form von Profilen in unterschiedlicher Geometrie wirtschaftlich herzustellen, hat es sich bewährt eine Vielzahl von imprägnierten Fasersträngen zu einem imprägnierten Faserbündel zusammenzuführen. Ein Faserbündel kann auch als Faserband vorliegen. Für eine derartige Anforderung ist es in Bezug auf die erfindungsgemäße Vorrichtung vorgesehen, dass die Austrittdüse am Ende des Fließkanals Austrittsöffnungen aufweist, in denen eine Vielzahl von imprägnierten Fasersträngen zu einem imprägnierten Faserbündel zusammengefasst werden.

Als Fasern werden erfindungsgemäß endlose Fasern aus Glas, aus Carbon, aus Stahl oder aus Kunststoff oder aus Mineralien oder aus Zellulose eingesetzt, die einen Durchmesser im Bereich von 5 bis 50 µm aufweisen, die zu Fasersträngen mit Garnstärken von 200 bis 9600 tex zusammengefasst und vorteilhafterweise unverdrillt auf Spulen aufgewickelt sind. Es können auch mehrere Faserstränge zusammen unverdrillt aufgewickelt sein, das heißt diese Garne liegen auf gefachten Spulen vor. Die Kunststoffe können hochtemperaturbeständigem Kunststoff wie beispielsweise Polyamid, Polyester oder Aramid umfassen. Auch Naturfasern eignen sich für das erfindungsgemäße Verfahren, unter denen Mineralfasern wie Basalt zu verstehen sind, als Zellulosefasern werden Fasern aus Flachs, Hanf oder Sisal verstanden.

Als thermoplastische Kunststoffe zum Imprägnieren der Faserstränge eignen sich alle herkömmlichen thermoplastischen Kunststoffe wie Polyethylen, Polypropylen oder sämtliche Ethylen-Propylen-Copolymere. Außerdem kommen erfindungsgemäß Modifikationen von Polyestern und Polyamiden vorteilhaft zum Einsatz, aber auch Hochleistungskunststoffe wie Polyoxymethylen, Polyphenylenoxid, Polyphenylensulfid, Polyurethan, Polykarbonat, Acrylnitril-Butadien-Styrol-Terpolymere, Polyetherketon oder auch biologisch abbaubare Kunststoffe wie Polyacticacid oder Polyhydroxyalkonat kommen erfindungsgemäß in Betracht.

Die Spannung, die vorzugsweise an den Fasersträngen zum Aufspreizen anliegt, liegt im Bereich von 20 bis 500 N. Die Spannung, die für einen Imprägniervorgang notwendig ist, wird nach der Viskosität der Kunststoffschmelze und entsprechend dem Material und Eigenschaften der Faserstränge eingestellt.

Die Vibration, der die aufgespreizten Faserstränge und der schmelzflüssige Kunststoff nach dem erfindungsgemäßen Verfahren während des Imprägniervorgangs ausgesetzt werden, liegt in einem breiten Frequenzbereich von 50 Hz bis 100 kHz, vorzugsweise von 50 bis 2000 Hz. Dabei wird vorzugsweise eine Amplitude, ein Federweg, im Bereich von 0,1 bis 5 mm eingestellt.

Die Produktionsgeschwindigkeit liegt bei dem erfindungsgemäßen Verfahren im Bereich von 5 bis 100 m/min. Diese Geschwindigkeiten erlauben eine wirtschaftliche Herstellung des faserverstärketen Kunststoffmaterials.

Außerdem ist es möglich, das Imprägnierverfahren je nach Position der Spreizungselemente und der Einwirkstärke der Vibrationen auf den Fließkanal in einen Bereich des Vorimprägnierens und des Nachimprägnierens einzuteilen. Beispielsweise kann ein vorimprägnierter Faserstrang über nachfolgende Spreizungselemente nachimprägniert werden, wobei weiterer schmelzflüssiger Kunststoff aus einem oder mehreren Fließkanälen aufgenommen werden kann. Durch die einwirkenden Schwingungen erfolgt eine erneute Verbesserung der Imprägniergüte.

Die Erfindung betrifft neben dem Herstellverfahren zusätzlich auch noch eine Vorrichtung zum kontinuierlichen Imprägnieren von Fasersträngen mit extrudiertem thermoplastischem Kunststoff. Hinsichtlich der Vorrichtung wird die oben angegebene Aufgabe ausgehend von einer Imprägniervorrichtung der eingangs genannten Gattung erfindungsgemäß dadurch gelöst, dass am Gehäuse ein Aggregat zum Erzeugen von Vibration angebracht ist, die auf den Fließkanal einwirkt, wobei das Aggregat zum Erzeugen von Vibration zwei Vibrationsgeneratoren, die bei gegenläufigem Betrieb gerichtete Schwingungen erzeugen.

Ziel der Erfindung ist es, die Imprägnierung von Fasersträngen mit thermoplastischem Kunststoff unter geringerer mechanischer und thermischer Belastung auch von relativ dicken Fasersträngen oder bei hohen Faseranteilen in einem wirtschaftlichen und kontinuierlichen Betrieb mit hoher Produktionsgeschwindigkeit zu ermöglichen. Hierzu ist für die erfindungsgemäße Vorrichtung entscheidend, dass ein auf den Fließkanal der Vorrichtung wirkendes Aggregat zum Erzeugen von Vibration angebracht ist. Durch die Vibration wird eine wesentliche Verbesserung der Imprägnierung der einzelnen Fasern mit Kunststoff bei hoher Produktionsgeschwindigkeit erreicht, woraus zusätzlich eine besonders schonende Handhabung der Faserstränge resultiert, die die Produktionssicherheit erhöht und die Produktionsunterbrechungen durch Abrisse auf Null reduziert. Mit den zwei Vibrationsgeneratoren, die bei gegenläufigem Betrieb gerichtete Schwingungen erzeugen, kann es zu kreisförmigen oder gerichteten oder stoßweise gerichteten oder zu fördernden Bewegungen kommen.

Vorteilhafte Ausgestaltungen der erfindungsgemäßen Vorrichtung ergeben sich aus den Unteransprüchen. Soweit in den Unteransprüchen angegebene Ausgestaltungen der Vorrichtung den in Unteransprüchen zum erfindungsgemäßen Verfahren genannten Verfahrensweisen nachgebildet sind, wird zur ergänzenden Erläuterung auf die obigen Ausführungen zu den entsprechenden Verfahrensansprüchen verwiesen.

Im Zusammenhang mit der Erfindung hat es sich als günstig erwiesen, wenn das Aggregat zum Erzeugen von Vibration entweder rotierende Umwuchten umfasst, oder Wanderwellenmotoren oder Schubkurbeln oder einen elektromagnetischen oder einen piezoelektrischen Vibrationsgenerator oder einen Ultraschallgenerator oder Kombinationen von diesen. Als Vibrationsgenerator mit rotierenden Unwuchten werden auch sogenannte Unwuchtmotoren bezeichnet.

Die Erzeugung von Vibration kann vorteilhafterweise dadurch geschehen, dass beiderseits auf Wellenenden angebrachte Unwuchtgewichte beim Rotieren eine Kreisschwingung erzeugen, die den daran angekoppelten Fließkanal über einen Motorfuß eine Schwingung aufprägt.

### Ausführunqsbeispiele

Im Folgenden wird die Erfindung anhand von Ausführungsbeispielen näher erläutert. Dabei zeigt schematisch
- **Figur 1**: eine erfindungsgemäße Vorrichtung in einer Ansicht von schräg oben;
- **Figur 2a**: einen Imprägniereinsatz mit einem Fließkanal mit Wellenstruktur und durchlaufenden Fasersträngen im Querschnitt;
- **Figur 2b**: eine vergrößerte Ansicht des Fließkanals aus Figur 2a mit einem durchlaufenden Faserstrang;
- **Figur 3a**: einen Imprägniereinsatz mit einem Fließkanal mit Stifteinsätzen;
- **Figur 3b**: eine vergrößerte Ansicht des Fließkanals aus Figur 3a mit einem durchlaufenden Faserstrang;
- **Figur 4**: einen Imprägniereinsatz mit einem Fließkanal mit Rundstabeinsätzen;
- **Figur 5**: die Funktionsweise eines Unwuchtantriebs zur Vibrationserzeugung;
- **Figur 6**: die Funktionsweise eines Schubkurbelantriebs zur Vibrationserzeugung
- **Figur 7**: die Funktionsweise eines elektromagnetischen Vibrationsgenerators zur Vibrationserzeugung;
- **Figur 8**: die Funktionsweise eines piezoelektrischen Schwingungserzeugers zur Vibrationserzeugung.

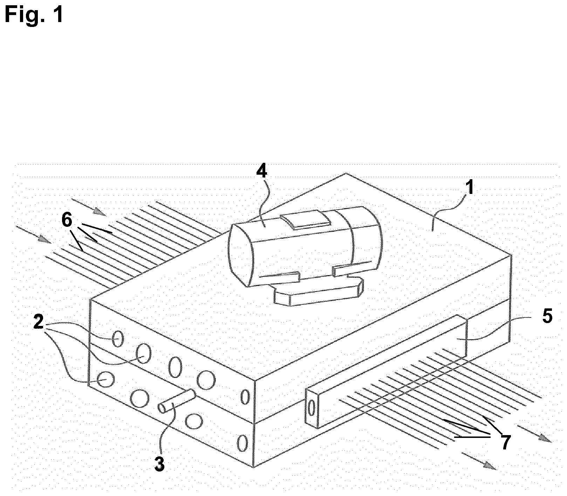

In **Figur** 1 ist eine Imprägniervorrichtung zur Durchführung des erfindungsgemäßen Verfahrens in einer perspektivischen Ansicht dargestellt. Die Vorrichtung hat ein teilbares Gehäuse 1 mit Heizelementen oder Heizstäben 2. Weiterhin weist das Gehäuse 1 einen Extruderanschluss 3 zur Schmelzezuführung auf und es verfügt ferner über einen hier nicht dargestellten teilbaren Imprägniereinsatz mit einem Fließkanal mit einer Wellenstruktur oder/und mit Stift- und/oder mit Rundeinsätzen. Seitlich oberhalb des Gehäuses 1 ist in Figur 1 ein Aggregat 4 zur Vibrationserzeugung, z.B. ein Unwuchtmotor oder ein Ultraschallgenerator, zu erkennen. Der Eintritt der Faserstränge 6 in den Imprägniereinsatz erfolgt seitlich über eine hier nicht sichtbare Eintrittsöffnung. Der Austritt des fertig hergestellten, unidirektional faserverstärkten Kunststoffmaterials 7 erfolgt seitlich bei der Austrittsdüse 5, die vorzugsweise auswechselbar ist.

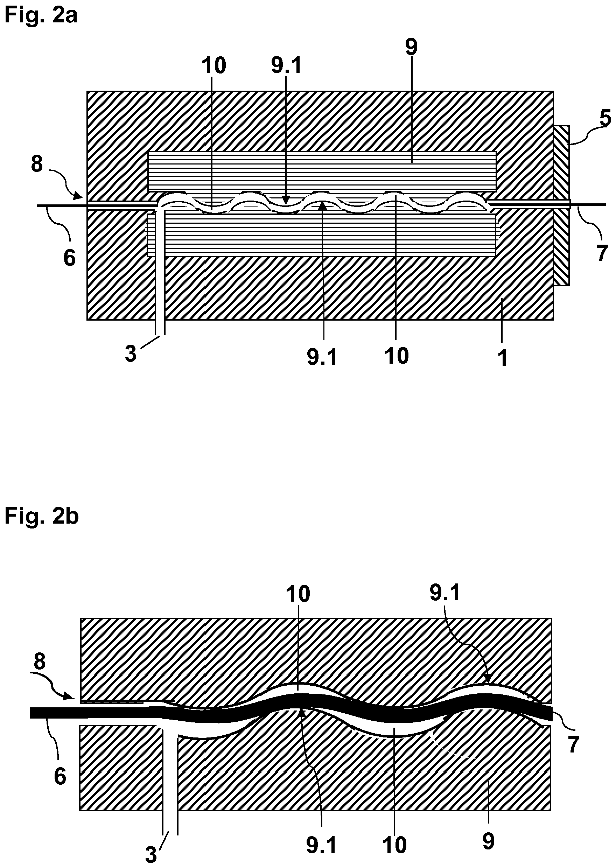

In **Figur 2a** ist der Imprägniereinsatz mit Wellenstruktur im Querschnitt dargestellt, in der der Eintritt der Faserstränge 6 an der Eintrittsöffnung 8 und der Austritt des imprägnierten Kunststoffmaterials als imprägnierter Faserstrang 7 an der Austrittsdüse 5 sichtbar sind. Eine Detailansicht des Fließkanals 10 von Figur 2a zeigt **Figur 2b**. Ein ondulierter Fließkanal 10 wird von zwei gegenüberliegenden Platten mit Wellenstruktur 9 (kurz Wellenplatten genannt) gebildet, die im geschlossenen Zustand einen gleichmäßigen Spalt mit einer lichten Durchlasshöhe von 3 mm ausbilden. Ein Faserstrang 6 (oder eine Vielzahl von Fasersträngen 6 ohne Imprägnierung wird an der Eintrittsöffnung 8 in den Fließkanal 10 eingeführt, wobei die Zuführung der Faserstränge 6 von nicht näher dargestellten Spulen kontinuierlich und unverdrillt erfolgt. Beim Einleiten des Faserstrangs 6 in die Eintrittsöffnung 8 ist der Faserstrang 6 vorzugsweise bereits vorgewärmt, unter Vorspannung und auf ein bestimmtes Maß aufgeweitet. Wie in Figur 2b näher dargestellt, kommt im Fließkanal 10 der Faserstrang 6 mit den als Spreizungselemente 9.1 ausgebildeten Wellen der Wellenplatten 9 in Kontakt, an denen eine Aufspreizung erfolgt.

Die Zuführung der Kunststoffschmelze erfolgt über einen Extruderanschluss 3 mit einem anschließenden System der Schmelzeverteilung. Es sind vielpunktförmige oder auch verzweigte Angussgeometrien möglich; ebenso kann mit verschiedenen Einspritzwinkeln gearbeitet werden. Als thermoplastische Kunststoffschmelze wird Polypropylen dem Fließkanal 10 zugeführt, wo es den aufgespreizte Faserstrang 6 durchdringt und jede einzelne Faser benetzt und imprägniert. Die Imprägnierung erfolgt unter Verdrängung der vorhandenen Gasphase aus dem Faserstrang 6 und dem Fließkanal 10. Freigesetzte Gase können dabei leicht über die Eintrittsöffnung 8 für den Faserstrang 6 entweichen. Gleichzeitig wird der Fließkanal 10 mit schmelzflüssigem Kunststoff aufgefüllt. Die einer Scherung unterworfene Kunststoffschmelze weist eine Viskosität im Bereich von 10³ bis 10⁸ mPa s auf. Bei Polypropylen liegt der Viskositätswert bei etwa 60 Pa s. Der Imprägniervorgang wird durch Vibration, die vom Aggregat 4 zur Vibrationserzeugung auf den Fließkanal 10 und den darin befindlichen Faserstrang 6 in der Kunststoffschmelze einwirkt, optimiert und es wird als faserverstärktes Kunststoffmaterial der imprägnierte Faserstrang 7 erhalten. Durch die frequenzabhängige Anregung des Polymers und des Faserstrang 6 wird eine tiefe Durchdringung beider Medien erreicht ohne den Einsatz von hohen Aufspreiz- oder Spannkräften. Als Vibrationsgenerator kommt beispielsweise ein Unwuchtmotor in Frage.

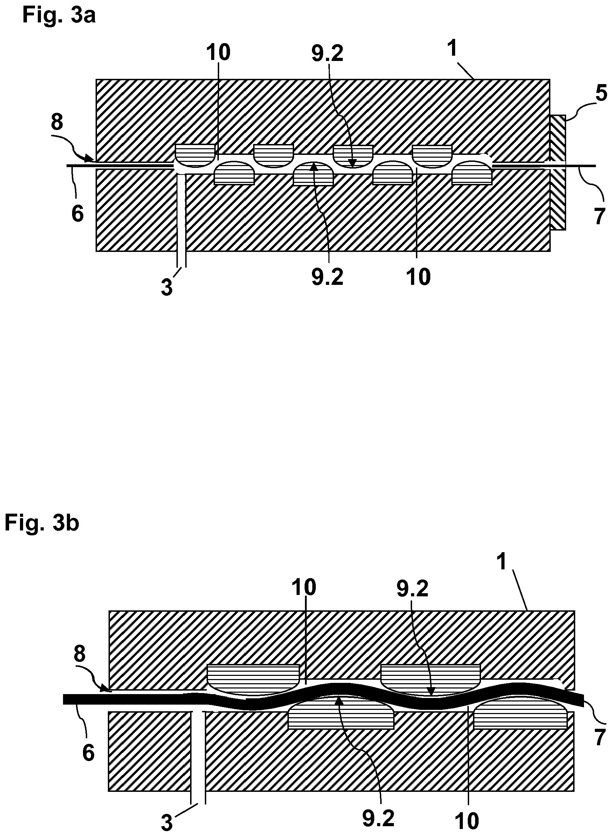

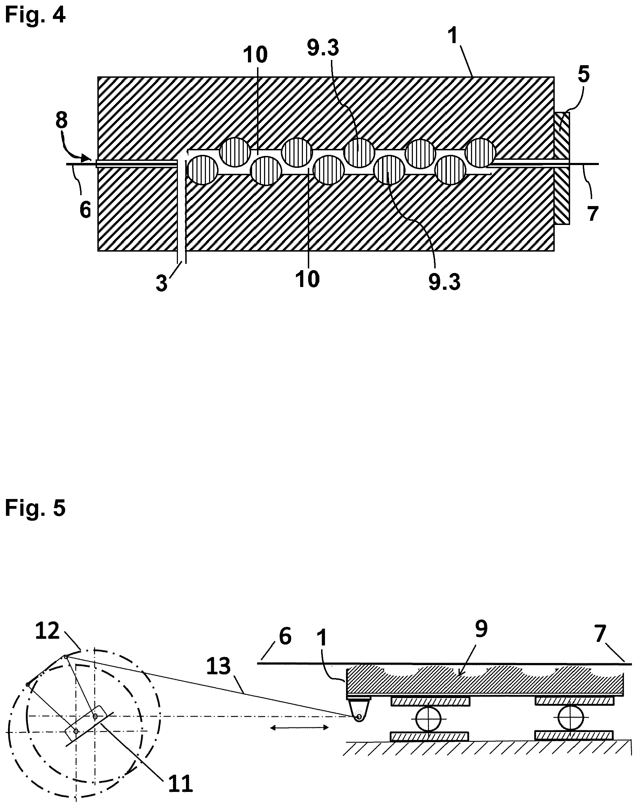

Weitere mögliche Ausgestaltungen des Imprägniereinsatzes zeigen die Figuren 3a, 3b und 4, die ohne Wellenplatten ausgeführt sind. In den **Figuren 3a** und **3b** sind in den Fließkanal 10 eine Reihe von Stifteinsätze 9.2 dargestellt, die als Spreizungselemente und Umlenkelemente mit einem abgerundeten Kopf ausgebildet sind. Diese Stifteinsätze 9.2 können auswechselbar oder fest in den Einsatz eingepasst, oder direkt als Fräskontur in den Imprägniereinsatz eingearbeitet sein. Auch Rundstäbe 9.3 im Fließkanal 10, wie sie in **Figur 4** dargestellt sind, wirken als Spreizungs- und Umlenkelemente. Wichtig ist auch in diesem Fall, dass der Fließkanal 10 eine geringe lichte Durchlassweite hat. Sie beträgt in diesem Fall 4 mm.

In einer weiteren (nicht dargestellten) Variante des Fließkanals 10 können wellenförmige Spreizungselementen 9.1 mit Stifteinsätzen 9.2 oder/und Rundstäben 9.3, oder mit Umlenkelementen anderer Ausprägung kombiniert sein.

Die Spreizungselemente, seien sie als wellenförmige Spreizungselemente 9.1, als Stifteinsätze 9.2, oder als Rundstäbe 9.3 ausgebildet, sind bezüglich ihres Querschnitts derart dimensioniert, dass ein vorbestimmter (nicht maximaler) Aufweitungsgrad (Spreizung) des Fasergebildes eingestellt wird. Die relative Lage der Spreizungselemente 9.1, 9.2, 9.3 zueinander wird dabei so eingestellt, dass der durch den Fließkanal 10 geführte Faserstrang 6 nur geringfügig aus seiner gradlinigen Bahn ausgelenkt und das Volumen des schmelzflüssigen Kunststoffs möglichst klein gehalten wird.

In jedem Fall erfolgt eine Anregung des im Fließkanal 10 befindlichen schmelzflüssige Kunststoffs sowie der aufgespreizten Fasern 6 über eine frequenzgesteuerte Schwingung, wodurch eine wesentliche Verbesserung der Imprägnierung der Fasern mit Kunststoff bei gleichzeitig extrem faserschonender Handhabung erreicht wird.

Eine weitere Ausführungsform der erfindungsgemäßen Vorrichtung ist in **Figur 5** schematisch dargestellt. Hierbei wird das Gehäuse 1 und der Imprägniersatz mit einer Wellenplatte 9 in Vibration versetzt. Dargestellt ist in der Zeichnung wie ein Wuchtmassenantrieb 11 durch die Fliehkräfte rotierender Unwuchtscheiben 12 Schwingungen erzeugt, die über ein Verbindungselement 13 auf das Gehäuse 1 und den darin befindlichen, an den wellenförmigen Spreizungselementen 9.1 der Wellenstruktur 9 aufgespreizten Fasersträngen 6 übertragen wird, so dass ein imprägnierter Faserstrang 7 aus dem Gehäuse 1 herausgeführt wird.

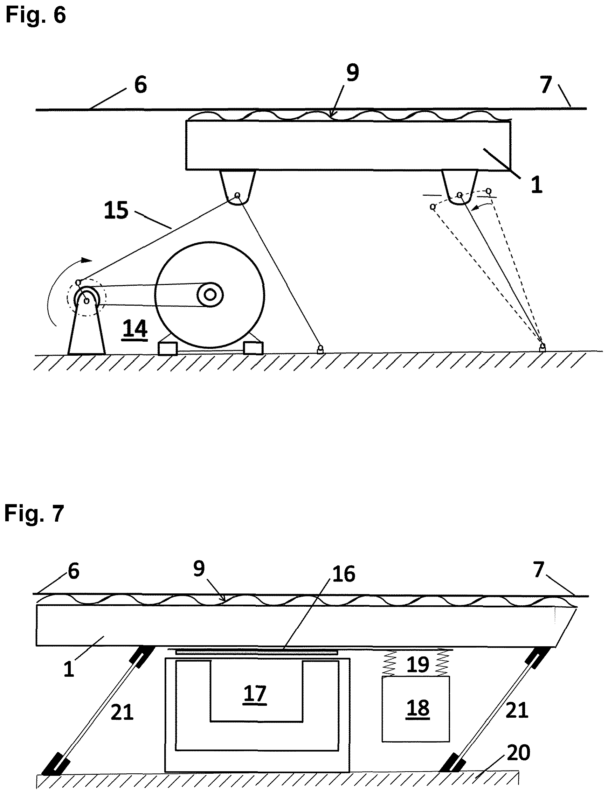

**Figur 6** zeigt eine weitere Ausführungsform der Erfindung, bei der das Gehäuse 1 und der Imprägniereinsatz mit Spreizungselementen 9.1 mit Hilfe eines Schubkurbelantriebs in Vibration versetzt werden. Dargestellt ist in der Zeichnung wie die Erregerkraft von einer getrennt vom Gehäuse 1 montierten Exzenterwelle 14 erzeugt und über eine Schubstange 15 unmittelbar auf das Gehäuse 1 und den Faserstrang 6 in der Kunststoffschmelze im Imprägniersatz mit Wellenstruktur 9 übertragen wird.

**Figur 7** stellt eine weitere Ausführungsform der Erfindung vor, bei der ein elektromagnetischer Vibrator zum Einsatz kommt. Dargestellt ist in der schematischen Zeichnung, dass ein elektromagnetisch angetriebenes Gehäuse 1 fest verbunden ist mit dem Anker 16 eines Elektromagneten 17 und mit einer Freimasse 18, die sich über vorgespannte Schraub- oder Blattfedern 19 gegen das Gehäuse 1 als zweite Masse abstützt. Die Erregerkraft wird durch zwei in der Zeichnung nicht beide dargestellte, spiegelbildlich angeordnete Elektromagnete aufgebracht, die durch Anschluss an eine nicht dargestellte Wechselstromquelle pulsierende Zug- und Schubkräfte erzeugen. Die Elektromagnete sind fest mit einem Gegenschwingrahmen 20 verbunden, auf dem auch das Gehäuse 1 über Federn 21 gelagert ist. Vorteilhaft an dieser Ausführungsform ist, dass die Frequenz der Elektromagnete 17 über ein in der Zeichnung nicht dargestelltes Frequenzsteuergerät beliebig eingestellt werden kann.

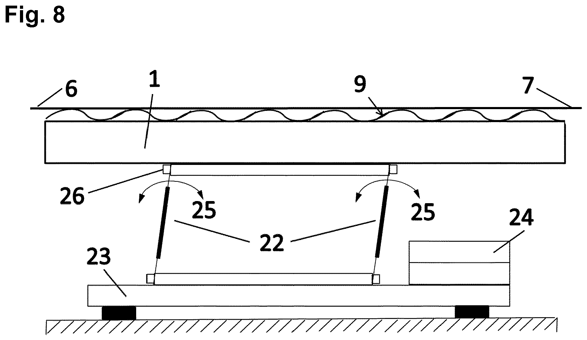

**Figur 8** zeigt eine weitere Ausführungsform der Erfindung, bei der die Vibration mittels piezoelektrischen Antriebs erzeugt wird. Dargestellt ist in der Zeichnung, dass aktive Biegeelemente 22 in Form von piezoelektrischen Wandlern jeweils fest mit dem Gehäuse 1, in dem sich im Imprägniersatz mit Spreizungselementen 9.1 die Faserstränge 6 in der Kunststoffschmelze befinden, und mit einer Trägerplatte 23 mit einem möglichen Zusatzgewicht 24 verbunden sind. Die Biegeelemente 22 sind piezokeramische Federn, die aus einer in der Darstellung nicht sichtbaren Trägerplatte einem federnden Material und darauf angebrachten Platten aus einem piezoelektrischen Keramikmaterial aufgebaut sind. Die Biegeelemente 22 werden an eine in der Zeichnung nicht dargestellte Wechselspannung angeschlossen und beginnen dann aufgrund des inversen piezoelektrischen Effekts mit der Frequenz der Wechselspannung zu vibrieren, wobei die Vibration durch die Pfeile mit der Bezugsziffer 25 veranschaulicht ist. Diese Vibration überträgt sich über die Montageplatte 26 direkt auf das Gehäuse 1 und den darin befindlichen Imprägniersatz mit Wellenstruktur 9.

Eine weitere, zeichnerisch nicht dargestellte, aber der Figur 1 nachempfundene Möglichkeit der Vibrationserzeugung stellt die Vibration mittels Wanderwellenmotor (Ultraschallmotor) dar, der den piezoelektrischen Effekt zum Erzeugen von Bewegung nutzt. Die Bewegung wird dabei durch hochfrequente Schwingungen erzeugt, deren Frequenz im nicht hörbaren Ultraschallbereich liegt.

Das Erfindungsgemäße Verfahren lässt, aufgrund der großen Flexibilität der Einstellung von Vibration, die Verarbeitung von thermisch extrem empfindlichen polymeren Kunststoffen und Fasern zu und wird nachfolgend anhand von einem weiteren Beispiel erläutert.

### Beispiel 1 (erfindungsgemäß)

Glasfasern mit einem mittleren Durchmesser von 17 µm wurden mit einem Ethylen/Propylen-Copolymer mit einem Anteil von 5 Gew.-% Ethylen nach dem erfindungsgemäßen Verfahren imprägniert. Die Viskosität dieser Polymerschmelze liegt bei einer Verarbeitungstemperatur von 240 °C und den dabei auftretenden Scherraten bei etwa 60 Pa s. Die Vibration wurde mit einem Unwuchtmotor erzeugt und hatte eine Frequenz von 50 Hz bei 3000 rpm und einem Federweg von 0,3 mm.

### Beispiel 2 (Vergleichsbeispiel)

Beispiel 1 wurde bei gleicher Produktionsgeschwindigkeit wiederholt, aber ohne Einwirkung von Vibration. Um Produkte mit gleicher Zusammensetzung (gleicher Faseranteil), und annähernd gleicher Imprägniergüte zu erreichen, musste allerdings die Aufspreizspannung erhöht und die Temperatur des schmelzflüssigen Kunststoffs heraufgesetzt werden, um die Viskosität der Schmelze auf etwa 40 Pa s einzustellen. Die Ergebnisse sind in der folgenden Tabelle zusammengestellt.

**Tabelle**

| | Aufspreizspannung (N) | Produktionsgeschwindigkeit (m/min) | Temperatur (°C) |
|---|---|---|---|
| Beispiel 1 (Vibration 50 Hz) | 148 | 10,1 | 240 |
| Vergleichsbeispiel (ohne Vibration) | 646 | 10,0 | 290 |

Aus den durchgeführten Ausführungsbeispielen wird deutlich, dass das erfindungsgemäße Verfahren bei wesentlich geringerer und die Fasern schonenderer Aufspreizspannung und niedrigerer Temperatur durchgeführt werden kann als eine Imprägnierung nach herkömmlichem Verfahren, wobei die Produktionsgeschwindigkeit ungefähr gleich gehalten wurde.

**Bezugszeichenliste:**

| | |
|---|---|
| Gehäuse | 1 |
| Heizstäbe | 2 |
| Extruderanschluss | 3 |
| Aggregat zur Vibrationserzeugung | 4 |
| Austrittsdüse | 5 |
| Faserstrang, unimprägniert | 6 |
| Imprägnierter Faserstrang | 7 |
| Eintrittsöffnung | 8 |
| Wellenstruktur, Wellenplatte | 9 |
| Wellenförmiges Spreizungselement | 9.1 |
| Stifteinsätze | 9.2 |
| Rundstäbe | 9.3 |
| Fließkanal | 10 |
| Wuchtmassenantrieb | 11 |
| Unwuchtscheibe | 12 |
| Verbindungselement | 13 |
| Exzenterwelle | 14 |
| Schubstange | 15 |
| Anker | 16 |
| Elektromagnet | 17 |
| Freimasse | 18 |
| Blattfedern | 19 |
| Gegenschwingrahmen | 20 |
| Federn | 21 |
| Biegeelemente | 22 |
| Trägerplatte | 23 |
| Zusatzgewicht | 24 |
| Pfeile | 25 |
| Montageplatte | 26 |

## Patentansprüche

1. Verfahren zum kontinuierlichen Herstellen von unidirektional faserverstärktem Kunststoffmaterial mit einem Faseranteil im Bereich von 10 bis 70 Vol.-%, wobei mindestens ein Faserstrang (6) durch einen Fließkanal (10) mit einer lichten Durchlasshöhe im Bereich von 0,1 bis 5,0 mm geführt wird, dort durch Spreizungselemente (9.1; 9.2; 9.3) gespreizt und mit einem schmelzflüssigen thermoplastischen Kunststoff mit einer Viskosität im Bereich zwischen 10³ mPa s und 10⁸ mPa s imprägniert wird, **dadurch gekennzeichnet, dass** während der Imprägnierung eine Vibration auf den mindestens einen Faserstrang (6) und die Kunststoffschmelze im Fließkanal (10) einwirkt, und dass beim Aufspreizen der Faserstränge (6) während der Imprägnierung eine mechanische Spannung im Bereich von 20 bis 1000 N eingestellt wird.

2. Verfahren nach Anspruch 1, **dadurch gekennzeichnet, dass** der Faserstrang (6) in einem in Fließrichtung eine Wellenstruktur (9) aufweisenden Fließkanal (10) geführt wird, wobei die Wellen der Wellenstruktur (9) als Spreizungselemente (9.1) für den Faserstrang (6) wirken.

3. Verfahren nach Anspruch 1 oder 2, **dadurch gekennzeichnet, dass** der Faserstrang (6) in einem Fließkanal (10) geführt wird, der Stifteinsätze (9.2) und/oder Rundstäbe (9.3) als Spreizungselemente aufweist.

4. Verfahren nach einem der Ansprüche 1 bis 3, **dadurch gekennzeichnet, dass** eine Vielzahl von imprägnierten Fasersträngen (7) zu einem imprägnierten Faserbündel zusammengeführt werden.

5. Verfahren nach einem der Ansprüche 1 bis 4, **dadurch gekennzeichnet, dass** endlose Fasern aus Glas oder aus Stahl oder aus Carbon oder aus Kunststoff oder aus Mineralien oder aus Cellulose eingesetzt werden, die einen Durchmesser im Bereich von 5 bis 50 µm aufweisen und die zu Fasersträngen (6) mit Garnstärken von 200 bis 9600 tex zusammengefasst sind.

6. Verfahren nach einem der Ansprüche 1 bis 5, **dadurch gekennzeichnet, dass** als thermoplastische Kunststoffe zum Imprägnieren der Faserstränge (6) Polyethylen oder Polypropylen oder Ethylen-Propylen-Copolymere oder Modifikationen von Polyamid oder Polyester oder andere Hochleistungskunststoffe wie Polyooxid xymethylen oder Polyphenylenoxid oder Polyphenylensulfid oder Polyurethan oder Polycarbonat oder Acrylnytril-Butadien-Styrol-Terpolymere oder Polyetherketon oder biologisch abbaubare Kunststoffe wie Polyacticacid oder Polyhydroxyalkanoate eingesetzt werden.

7. Verfahren nach einem der Ansprüche 1 bis 6, **dadurch gekennzeichnet, dass** beim Aufspreizen der Faserstränge (6) während der Imprägnierung, eine mechanische Spannung im Bereich von 200 bis 500 N eingestellt wird.

8. Verfahren nach einem der Ansprüche 1 bis 7, **dadurch gekennzeichnet, dass** die Vibration, der der aufgespreizte Faserstrang (6) und der schmelzflüssige Kunststoff im Fließkanal (10) während der Imprägnierung ausgesetzt sind, im Bereich von 0,05 bis 100 kHz, vorzugsweise von 0,05 bis 20 kHz, eingestellt wird.

9. Verfahren nach einem der Ansprüche 1 bis 8, **dadurch gekennzeichnet, dass** es bei einer Produktionsgeschwindigkeit im Bereich von 5 m/min bis 100 m/min durchgeführt wird.

10. Vorrichtung zum kontinuierlichen Imprägnieren von Fasersträngen (6) mit extrudiertem thermoplastischem Kunststoff gemäß dem Verfahren nach einem der Ansprüche 1 bis 9, mit einem Gehäuse (1) mit Heizelementen (2), einem Extruderanschluss (3) zur Schmelzezuführung und mindestens eine Öffnung (8) zur Zuführung von mindestens einem Faserstrang (6) in einen mindestens ein Spreizungselement (9.1; 9.2; 9.3) für den Faserstrang (6) aufweisenden Fließkanal (10) mit einer lichten Durchlasshöhe im Bereich von 0,1 bis 5,0 mm, in dem die Imprägnierung des Faserstrangs (6) erfolgt, und mit einer Austrittsdüse (5) zum Herausführen des mindestens einen imprägnierten Faserstrangs (7), **dadurch gekennzeichnet, dass** am Gehäuse (1) ein Aggregat (4) zum Erzeugen von Vibration angebracht ist, die auf den Fließkanal (10) einwirkt, wobei das Aggregat (4) zum Erzeugen von Vibration zwei Vibrationsgeneratoren umfasst, die bei gegenläufigem Betrieb gerichtete Schwingungen erzeugen.

11. Vorrichtung nach Anspruch 10, **dadurch gekennzeichnet, dass** der Fließkanal (10) in Fließrichtung eine Wellenstruktur (9) aufweist, deren Wellen als Spreizungselemente (9.1) für den Faserstrang (6) ausgebildet sind.

12. Vorrichtung nach Anspruch 10 oder 11, **dadurch gekennzeichnet, dass** der Fließkanal (10) Stifteinsätze (9.2) und/oder Rundstäbe (9.3) als Spreizungselemente aufweist.

13. Vorrichtung nach einem der Ansprüche 10 bis 12, **dadurch gekennzeichnet, dass** die Austrittdüse (5) am Ende des Fließkanals (10) Austrittsöffnungen aufweist, in denen eine Vielzahl von imprägnierten Fasersträngen (7) zu einem imprägnierten Faserbündel zusammengefasst werden.

14. Vorrichtung nach einem der Ansprüche 10 bis 13, **dadurch gekennzeichnet, dass** das Aggregat (4) zum Erzeugen von Vibration einen Unwuchtmotor oder einen Wanderwellenmotor oder einen Schubkurbelantrieb oder einen elektromagnetischen oder einen piezoelektrischen Vibrationsgenerator oder einen Ultraschallgenerator umfasst.

15. Vorrichtung nach Anspruch 14, **dadurch gekennzeichnet, dass** die Vibration dadurch erzeugt wird, dass beiderseits auf Wellenenden angebrachte Unwuchtgewichte beim Rotieren eine Kreisschwingung erzeugen, die den daran angekoppelten Fließkanal über einen Motorfuß eine Schwingung aufprägt.

## Claims

1. A method for continuously producing a unidirectionally fiber-reinforced plastic material having a fiber content in the range from 10 to 70 vol.%, wherein at least one fiber strand (6) is led through a flow channel (10) having an open passage height in the range from 0.1 to 5.0 mm and is spread there by spreading elements (9.1, 9.2, 9.3) and impregnated with a molten thermoplastic plastic having a viscosity in the range between 10³ mPa s and 10⁸ mPa s, **characterized in that** during the impregnation a vibration is applied to the at least one fiber strand (6) and to the plastic melt in the flow channel (10), and **in that** when the fiber strands (6) are spread during the impregnation a mechanical tension in the range from 20 to 1000 N is set.

2. The method according to claim 1, **characterized in that** the fiber strand (6) is guided in a flow channel (10) having an undulating structure (9) in the flow direction, wherein the undulations of the undulating structure (9) act as spreading elements (9.1) for the fiber strand (6).

3. The method according to claim 1 or 2, **characterized in that** the fiber strand (6) is guided in a flow channel (10) which has pin inserts (9.2) and/or round rods (9.3) as spreading elements.

4. The method according to one of claims 1 to 3, **characterized in that** a plurality of impregnated fiber strands (7) is combined into an impregnated fiber bundle.

5. The method according to one of claims 1 to 4, **characterized in that** continuous fibers are used which are made of glass or of steel or of carbon or of plastic or of minerals or of cellulose, which have a diameter in the range from 5 to 50 µm and are combined into fiber strands (6) with yarn thicknesses of 200 to 9600 tex.

6. The method according to one of claims 1 to 5, **characterized in that** polyethylene or polypropylene or ethylene propylene copolymers or modifications of polyamide or polyester or other high-performance plastics, such as polyoxymethylene or polyphenylene oxide or polyphenylene sulfide or polyurethane or polycarbonate or acrylonitrile butadiene styrene terpolymers or polyether ketone or biodegradable plastics such as polylactic acid or polyhydroxyalkanoates, are used as thermoplastic plastics for impregnation of the fiber strands (6).

7. The method according to one of claims 1 to 6, **characterized in that** when the fiber strands (6) are spread during the impregnation a mechanical tension in the range from 200 to 500 N is set.

8. The method according to one of claims 1 to 7, **characterized in that** the vibration to which the spread fiber strand (6) and the molten plastic in the flow channel (10) are exposed during the impregnation is set in the range from 0.05 to 100 kHz, preferably from 0.05 to 20 kHz.

9. The method according to one of claims 1 to 8, **characterized in that** it is carried out at a production speed in the range from 5 m/min to 100 m/min.

10. A device for continuous impregnation of fiber strands (6) with extruded thermoplastic plastic using the method according to one of claims 1 to 9, comprising a housing (1) with heating elements (2), an extruder connection (3) for delivering melt and at least one opening (8) for delivering at least one fiber strand (6) into a flow channel (10) having at least one spreading element (9.1; 9.2; 9.3) for the fiber strand (6) and having an open passage height in the range from 0.1 to 5.0 mm, in which the impregnation of the fiber strand (6) takes place, and comprising an outlet nozzle (5) for discharging the at least one impregnated fiber strand (7), **characterized in that** a unit (4) for generating vibration which acts on the flow channel (10) is mounted on the housing (1), wherein the unit (4) for generation of vibration comprises two vibration generators which generate directional vibrations when operated in opposite directions.

11. The device according to claim 10, **characterized in that** the flow channel (10) has an undulating structure (9) in the flow direction, the undulations of which are formed as spreading elements (9.1) for the fiber strand (6).

12. The device according to claim 10 or 11, **characterized in that** the flow channel (10) has pin inserts (9.2) and/or round rods (9.3) as spreading elements.

13. The device according to one of claims 10 to 12, **characterized in that** at the end of the flow channel (10) the outlet nozzle (5) has outlet openings in which a plurality of impregnated fiber strands (7) is combined into an impregnated fiber bundle.

14. The device according to one of claims 10 to 13, **characterized in that** the unit (4) comprises an imbalance motor or a travelling wave motor or a slider crank mechanism or an electromagnetic or a piezoelectric vibration generator or an ultrasound generator for generation of vibration.

15. The device according to claim 14, **characterized in that** the vibration is generated **in that** imbalance weights mounted on both sides at the shaft ends generate a circular vibration as they rotate, thus imposing a vibration on the connected flow channel via a motor base.

## Revendications

1. Procédé de production en continu de matière plastique renforcée par des fibres unidirectionnelles ayant une teneur en fibres comprise entre 10 et 70 %vol, au moins un écheveau de fibres (6) étant guidé à travers un conduit d'écoulement (10) d'une hauteur de passage intérieur comprise entre 0,1 et 5,0 mm, où les fibres sont écartées par des éléments d'écartement (9.1 ; 9.2 ; 9.3) et imprégnées d'une matière thermoplastique en fusion ayant une viscosité comprise entre 103 mPa s et 108 mPa s, **caractérisé en ce que**, pendant l'imprégnation, une vibration agit sur l'au moins un écheveau de fibres (6) et la matière plastique fondue dans le conduit d'écoulement (10), et **en ce que** lors de l'écartement des écheveaux de fibres (6), pendant l'imprégnation, une tension mécanique comprise entre 20 et 1000 N est réglée.

2. Procédé selon la revendication 1, **caractérisé en ce que** l'écheveau de fibres (6) est guidé dans un conduit d'écoulement (10) présentant une structure ondulée (9) dans le sens d'écoulement, les ondulations de la structure ondulée (9) agissant comme éléments d'écartement (9.1) pour l'écheveau de fibres (6).

3. Procédé selon la revendication 1 ou 2, **caractérisé en ce que** l'écheveau de fibres (6) est guidé dans un conduit d'écoulement (10), qui comporte des inserts formant ergots (9.2) et/ou des barres rondes (9.3) comme éléments d'écartement.

4. Procédé selon l'une des revendications 1 à 3, **caractérisé en ce qu'**une pluralité d'écheveaux de fibres (7) imprégnés sont réunis en un faisceau de fibres imprégné.

5. Procédé selon l'une des revendications 1 à 4, **caractérisé en ce que** des fibres continues en verre ou en acier ou en carbone ou en matière plastique ou en minéraux ou en cellulose sont utilisées, qui présentent un diamètre compris entre 5 et 50 µm et qui sont groupées en écheveaux de fibres (6) avec des épaisseurs de fil allant de 200 à 9600 tex.

6. Procédé selon l'une des revendications 1 à 5, **caractérisé en ce que** du polyéthylène ou du polypropylène ou des copolymères éthylène-propylène ou des modifications de polyamide ou de polyester ou d'autres matières plastiques à haute performance telles que le polyoxyméthylène ou le polyoxyde de phénylène ou le polysulfure de phénylène ou le polyuréthane ou le polycarbonate ou des terpolymères d'acrylonitrile butadiène styrène ou du polyéthercétone ou des matières plastiques biodégradables telles que l'acide polylactique ou les polyhydroxyalcanoates sont utilisés comme matière thermoplastique pour imprégner les écheveaux de fibres (6).

7. Procédé selon l'une des revendications 1 à 6, **caractérisé en ce que**, lors de l'écartement des écheveaux de fibres (6), pendant l'imprégnation, une tension mécanique comprise entre 200 et 500 N est réglée.

8. Procédé selon l'une des revendications 1 à 7, **caractérisé en ce que** la vibration, à laquelle sont soumis l'écheveau de fibres (6) écarté et la matière plastique en fusion dans le conduit d'écoulement (10) pendant l'imprégnation, est réglée dans un intervalle de 0,05 à 100 kHz, de préférence de 0,05 à 20 kHz.

9. Procédé selon l'une des revendications 1 à 8, **caractérisé en ce qu'**il est exécuté à une vitesse de production comprise entre 5 m/min et 100 m/min.

10. Dispositif d'imprégnation en continu d'écheveaux de fibres (6) avec de la matière thermoplastique extrudée d'après le procédé selon l'une des revendications 1 à 9, comprenant un boîtier (1) doté d'éléments chauffants (2), un raccord d'extrudeuse (3) pour l'alimentation en masse fondue et au moins une ouverture (8) pour l'alimentation d'au moins un écheveau de fibres (6) dans un conduit d'écoulement (10) comportant au moins un élément d'écartement (9.1 ; 9.2 ; 9.3) pour l'écheveau de fibres (6) et présentant une hauteur de passage intérieur comprise entre 0,1 et 5,0 mm, dans lequel l'imprégnation de l'écheveau de fibres (6) est effectuée, et comprenant une buse de sortie (5) pour faire sortir l'au moins un écheveau de fibres (7) imprégné, **caractérisé en ce qu'**une unité (4) pour générer une vibration est montée sur le boîtier (1), ladite vibration agissant sur le conduit d'écoulement (10), l'unité (4) pour générer une vibration comprenant deux générateurs de vibrations, qui génèrent des oscillations dirigées lors du fonctionnement en sens opposés.

11. Dispositif selon la revendication 10, **caractérisé en ce que** le conduit d'écoulement (10) présente une structure ondulée (9) dans le sens d'écoulement, dont les ondulations sont réalisées sous la forme d'éléments d'écartement (9.1) pour l'écheveau de fibres (6).

12. Dispositif selon la revendication 10 ou 11, **caractérisé en ce que** le conduit d'écoulement (10) comporte des inserts formant ergots (9.2) et/ou des barres rondes (9.3) comme éléments d'écartement.

13. Dispositif selon l'une des revendications 10 à 12, **caractérisé en ce que** la buse de sortie (5) comporte des ouvertures de sortie à l'extrémité du conduit d'écoulement (10), dans lesquelles une pluralité d'écheveaux de fibres (7) imprégnés sont groupés en un faisceau de fibres imprégné.

14. Dispositif selon l'une des revendications 10 à 13, **caractérisé en ce que** l'unité (4) pour générer une vibration comprend un moteur déséquilibré ou un moteur à onde progressive ou un entraînement par bielle-manivelle ou un générateur de vibrations électromagnétique ou piézoélectrique ou un générateur d'ultrasons.

15. Dispositif selon la revendication 14, **caractérisé en ce que** la vibration est générée par le fait que des balourds montés sur des extrémités d'arbre des deux côtés génèrent une vibration circulaire lors de la rotation, qui applique une oscillation au conduit d'écoulement couplé à ceux-ci par le biais d'un pied de moteur.
